# EUROPEAN PATENT APPLICATION

(11) **EP 4 831 820 A1**
(43) Date of publication of application: **28.10.2026**
(21) Application number: 26173884.3
(22) Date of filing: 22.04.2026
(51) Int. Cl.: G06F 13/42, G06F 13/38

(54) **MULTI-DOMAIN ORDERING RELAXATION OVER UNORDERED INTERCONNECT**

(30) Priority: 22.04.2025 US 202519185282
(71) Applicant: Mellanox Technologies, Ltd., 2069200 Yokneam (IL)
(72) Inventor: ZIV, Chai, 2069200 Yokneam (IL); KOREN, Ran, 2069200 Yokneam (IL); MARKUS, Ohad, 2069200 Yokneam (IL); NARKIS, Lior, 2069200 Yokneam (IL); SHAHAR, Ariel, 2069200 Yokneam (IL); PANEAH, Peter, 2069200 Yokneam (IL); KADMONY, Uri, 2069200 Yokneam (IL)
(74) Representative: Mathys & Squire

(57) **Abstract**

In one embodiment, a device comprises a network interface to receive network streams over a network, a data bus interface to share data with a connected device via a data bus, and processing circuitry to send transactions associated with the network streams to a global visibility point of the connected device via the data bus, and manage sending of the transactions via the data bus to the global visibility point according to multiple ordering domains such that at least two of the network streams utilize different ones of the ordering domains.

## Description

### FIELD OF DISCLOSURE

The present disclosure relates to computer systems, and more particularly but not exclusively to sending transactions over an unordered interconnect.

### BACKGROUND

In traditional Peripheral Component Interconnect Express (PCIe) systems, data is posted to a global visibility point via an ordered fabric, ensuring that transactions follow a specific order. When a producer posts data followed by a flag to a global visibility point (e.g., to a device such as a processor or to a memory) over a PCIe interconnect, the system ensures that the flag is only observed by consumers after the data is globally observed by the consumers. This process relies on the PCIe specification's enforcement of transaction ordering, where flags are only visible after the corresponding data is globally visible to consumers.

PCIe uses two primary types of ordering for write transactions: relaxed ordering (RO) and strong ordering (SO). With RO, transactions can be posted without enforcing order, allowing for greater flexibility and parallelism. However, when using SO transactions, any subsequent transaction must wait until all previous transactions are globally visible to consumers, ensuring strict ordering. This approach guarantees data integrity but can introduce inefficiencies when high bandwidths are required.

The use of CHI protocol in a System on Chip (SoC) environment introduces an unordered coherent fabric with full cache coherency. In this case, a coherent requester node (RN-F) interfaces with a network interface controller to convert PCIe transactions to CHI protocol, enforcing the PCIe ordering rules across the interconnect. For RO transactions, RN-F sends data directly to memory, while SO transactions require the RN-F to take ownership of the transaction and enforce cache coherency until the transaction is completed in order.
An alternative approach, which was introduced in the PCIe specification revision 6.2, is to use unordered fabrics with unordered input/output (UIO), where transactions can be sent to a global visibility point without waiting for strict ordering guarantees. This allows for higher parallelism and reduced latency. However, UIO introduces a different challenge: the producer must wait for an acknowledgment (ACK) from the global visibility point before posting the flag. This process, known as source ordering, requires the producer to ensure that all data transactions are globally visible to consumers before flagging, and introduces additional latency for flag visibility.

In high-performance computing environments, the balance between maintaining data integrity and achieving high bandwidth with low latency remains an ongoing area of research and development. As systems continue to evolve, new approaches to transaction ordering and data visibility are being explored to meet the increasing demands of modern applications and workloads.

### OVERVIEW

The invention is defined by the claims. In order to illustrate the invention, aspects and embodiments which may or may not fall within the scope of the claims are described herein.

There is provided in accordance with an embodiment of the present disclosure, a device, comprising a network interface to receive network streams over a network, a data bus interface to share data with a connected device via a data bus, and processing circuitry to manage sending of transactions via the data bus to a global visibility point of the connected device according to multiple ordering domains such that at least two of the network streams utilize different ones of the ordering domains.

Further in accordance with an embodiment of the present disclosure, the device further comprising a network interface controller, which includes packet processing circuitry comprising the processing circuitry.

Still further in accordance with an embodiment of the present disclosure, the processing circuitry is to generate a given flag transaction, belonging to a given ordering domain of the multiple ordering domains, to send to the global visibility point, wait, prior to sending the given flag transaction to the global visibility point, for at least one acknowledgment of all previously sent transactions belonging to the given ordering domain being globally observed by consumers, and send the given flag transaction via the data bus to the global visibility point in response to receiving the at least one acknowledgment.

Additionally in accordance with an embodiment of the present disclosure, the given flag transaction is a completion notification that the previous sent transactions are globally observed by the consumers.

Moreover in accordance with an embodiment of the present disclosure, the processing circuitry is to send the given flag transaction via the data bus to the global visibility point while at least one acknowledgement of at least one previously sent transaction belonging to at least another ordering domain, different to the given ordering domain, being globally observed by the consumers has not been received by the processing circuitry.

Further in accordance with an embodiment of the present disclosure, the at least one previously sent transaction belonging to the at least another ordering domain includes a flag transaction.

Still further in accordance with an embodiment of the present disclosure, the at least one previously sent transaction belonging to the at least another ordering domain includes a data transaction.

Additionally in accordance with an embodiment of the present disclosure, the processing circuitry is to send a given data transaction via the data bus to the global visibility point while at least one acknowledgement of at least one previously send data transaction belonging to the given ordering domain being globally observed by the consumers has not been received by the processing circuitry.

Moreover, in accordance with an embodiment of the present disclosure, the multiple ordering domains correspond to multiple network steams.

Further in accordance with an embodiment of the present disclosure, the processing circuitry is to generate a given flag transaction, belonging to a global ordering domain, to send to the global visibility point, wait, prior to sending the given flag transaction to the global visibility point, for acknowledgment of all previously sent transactions belonging to any of the multiple ordering domains being globally observed by consumers, and send the given flag transaction via the data bus to the global visibility point in response to receiving the acknowledgment.

Still further in accordance with an embodiment of the present disclosure, the processing circuitry is to send the transactions to the global visibility point via the data bus using an unordered input-output protocol.

There is provided in accordance with another embodiment of the present disclosure, a system for configuring multiple ordering domains in a network interface controller (NIC), the system comprising a processor to receive a configurable interface from the NIC for associating network streams with ordering domains, generate domain association instructions for a plurality of network streams, and transmit the domain association instructions to the NIC via the configurable interface, and an interface to share data, including the domain association instructions, with the NIC.

Further in accordance with an embodiment of the present disclosure, the processor is to select a configuration level from one or more of a driver level, a function level, an application level, or a hypervisor level, and specify the domain association based on the selected configuration level.

There is also provided in accordance with still another embodiment of the present disclosure, a method, comprising receiving network streams over a network, and managing sending transactions via a data bus to a global visibility point of a connected device according to multiple ordering domains such that at least two of the network streams utilize different ones of the ordering domains.

Further in accordance with an embodiment of the present disclosure, the method further comprising generating a given flag transaction, belonging to a given ordering domain of the multiple ordering domains, to send to the global visibility point, waiting, prior to sending the given flag transaction to the global visibility point, for at least one acknowledgment of all previously sent transactions belonging to the given ordering domain being globally observed by consumers, and sending the given flag transaction via the data bus to the global visibility point in response to receiving the at least one acknowledgment.

Still further in accordance with an embodiment of the present disclosure, the given flag transaction is a completion notification that the previous sent transactions are globally observed by the consumers.

Additionally in accordance with an embodiment of the present disclosure, the method further comprising sending the given flag transaction via the data bus to the global visibility point while at least one acknowledgement of at least one previously sent transaction belonging to at least another ordering domain, different to the given ordering domain, being globally observed by the consumers has not been received.

Moreover, in accordance with an embodiment of the present disclosure, the method further comprising sending a given data transaction via the data bus to the global visibility point while at least one acknowledgement of at least one previously sent data transaction belonging to the given ordering domain being globally observed by the consumers has not been received.

Further in accordance with an embodiment of the present disclosure, the method further comprising generating a given flag transaction, belonging to a global ordering domain, to send to the global visibility point, waiting, prior to sending the given flag transaction to the global visibility point, for acknowledgment of all previously sent transactions belonging to any of the multiple ordering domains being globally observed by consumers, and sending the given flag transaction via the data bus to the global visibility point in response to receiving the acknowledgment.

Still further in accordance with an embodiment of the present disclosure, the method further comprising sending the transactions to the global visibility point via the data bus using an unordered input-output protocol.

There is also provided in accordance with still another embodiment of the present disclosure, a method for configuring multiple ordering domains in a network interface controller (NIC), the method comprising receiving a configurable interface from the NIC for associating network streams with ordering domains, generating domain association instructions for a plurality of network streams, and transmitting the domain association instructions to the NIC via the configurable interface.

Further in accordance with an embodiment of the present disclosure, the generating comprises selecting a configuration level from one or more of a driver level, a function level, an application level, or a hypervisor level, and specifying the domain association based on the selected configuration level.

In one embodiment, a device comprises a network interface to receive network streams over a network, a data bus interface to share data with a connected device via a data bus, and processing circuitry to send transactions associated with the network streams to a global visibility point of the connected device via the data bus, and manage sending of the transactions via the data bus to the global visibility point according to multiple ordering domains such that at least two of the network streams utilize different ones of the ordering domains.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

The present disclosure will be understood from the following detailed description, taken in conjunction with the drawings in which:
Fig. 1 is a simplified block diagram of a system constructed and operative in accordance with an embodiment of the present disclosure;
Fig. 2 is a sequence diagram illustrating communication flow between devices of Fig. 1, according to aspects of the present disclosure;
Fig. 3 is a flowchart including steps in a method of managing transactions according to ordering domains, in accordance with an embodiment;
Fig. 4 is a flowchart including steps in a method of configuring multiple ordering domains in a network device, according to an aspect of the present disclosure; and
Fig. 5 is a block diagram that schematically illustrates a computing system, e.g., a data center or a High-Performance Computing (HPC) cluster, in accordance with an embodiment of the present disclosure.

### DESCRIPTION OF EXAMPLE EMBODIMENTS

### DEFINITIONS

As used herein, the term "producer" may refer to a component or entity in a computing system that generates or sends data, transactions, or other information to be processed or consumed by other parts of the system.

As used herein, the term "consumer" may refer to a component or entity in a computing system that receives, processes, or utilizes data, transactions, or other information generated by a producer.

As used herein, the term "network stream" may refer to a sequence of related data packets or transactions that are transmitted over a network, typically associated with a particular communication session or data flow between network endpoints. A network stream may be defined by a network flow or queue pair.

As used herein, the term "network flow" may refer to a sequence of related packets or data units that share common characteristics such as source and destination addresses, protocol type, and other identifying information. Network flows may be used to group and manage traffic with similar properties or requirements.

As used herein, the term "queue pair" may refer to a communication mechanism consisting of a send queue and a receive queue, typically used in remote direct memory access (RDMA) protocols. Queue pairs may provide a virtual communication channel between network endpoints, allowing for efficient data transfer and processing.

As used herein, the term "ordering domain" may refer to a logical grouping or classification of transactions within a system, where transactions within the same domain may have specific ordering requirements or relationships with respect to other transactions being sent over the network and then over the data communication bus to the global visibility point. Ordering domains may be defined by any suitable criteria such as network stream or flow, or queue pair.

As used herein, the term "flag transaction" may refer to a special type of transaction or message used to indicate the completion, status, or availability of other transactions or data, often used as a synchronization mechanism between producers and consumers.

As used herein, the term "global visibility point" may refer to a location or state in a system where data or transactions become visible or accessible to all relevant components or consumers within the system. A global visibility point may be located in a memory or processor, for example.

As used herein, the term "globally visible to consumers" may refer to the state or condition where data or transactions have reached a point in the system where they can be observed or accessed by all relevant consumers or components that may need to process or utilize that information.

### OVERVIEW OF EXAMPLE EMBODIMENTS

As previously mentioned, traditional PCIe systems may enforce strict transaction ordering, which can limit scalability and efficiency, particularly in high-bandwidth scenarios. In unordered I/O (UIO) systems, the producer must wait for acknowledgments (ACKs) before sending a flag, introducing latency that prevents the system from efficiently sending subsequent data. A potential solution is to send flags as relaxed order (RO) transactions after data is globally visible to consumers, but this introduces a new challenge: sequential sending of flags reduces bandwidth. The problem is to mitigate the latency and bandwidth limitations caused by waiting for ACKs and sequential flag sending in high-performance systems.

Embodiments of the present disclosure address at least some of the above drawbacks by providing a system and method for managing transactions sent to a global visibility point of a connected device (e.g., host device such as a server, or a peer device, such as a peripheral device or GPU) via a data communication bus according to multiple ordering domains. This approach allows for independent treatment of UIO transactions from different domains, such as different network streams or queue pairs (QPs).

In some embodiments, the system sends data transactions for each domain as desired and can send the flag for a given domain when the previous data or flags for that domain have been acknowledged, without having to wait for any acknowledgments for data or flags from any other domain. This approach reduces latency and improves bandwidth utilization. The relationship between domains and network streams is established, with transactions belonging to a single network stream typically associated with one ordering domain. A domain may include one or more network streams.

In some cases, the system treats UIO transactions of different domains independently. For example, there are no ordering requirements between UIO data transactions irrespective of ordering domain, while for UIO flag transactions, a given flag transaction must push (i.e., must wait for acknowledgements for) previous flag and data transactions of the same domain as the given flag transaction.

The system also incorporates a global ordering domain. For a flag transaction belonging to the global ordering domain, the system waits for acknowledgments of all previously sent transactions from all ordering domains before sending the global flag transaction to the global visibility point. This ensures that no global flag transaction can be sent until all previously sent transactions from all other ordering domains are globally visible to the consumers.

The advantages of this solution include improved parallelism, reduced latency, and increased bandwidth, particularly in high-performance computing environments that require both data integrity and high-speed data transfer.

Additionally, the system includes an interface (e.g., API) for users to configure domains, allowing for customization of domain associations at various levels such as driver, function, application, or hypervisor levels.

### SYSTEM DESCRIPTION

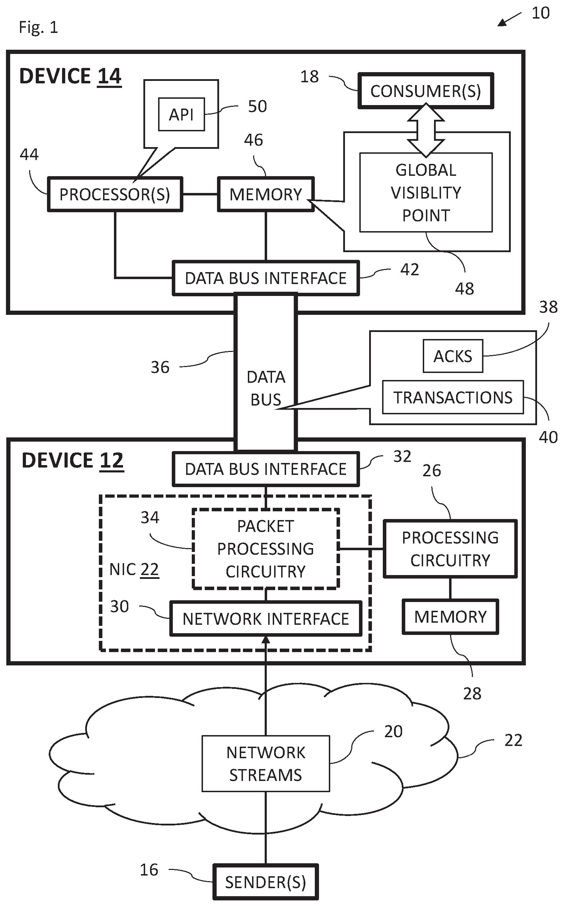

Reference is now made to Fig. 1, which is a block diagram illustrating a system 10 for managing transactions according to multiple ordering domains. The system 10 includes a network device 12 and a host device 14. The system 10 enables communication between one or more senders 16 and one or more consumers 18 via network streams 20.

The network device 12 comprises a network interface 30 to receive network streams 20 over network 22 from sender(s) 16. The network device 12 also includes a data bus interface 32 to share data with the host device 14 via a data bus 36 (e.g., operated according to any suitable protocol, such as PCIe). In some cases, the network device 12 may comprise a network interface controller 22, which includes packet processing circuitry 34 and the network interface 30. The packet processing circuitry 34 may manage network communications between the network interface 30 and the data bus interface 32.

The network device 12 includes processing circuitry 26 to send transactions 40 associated with multiple network streams 20 to global visibility point 48 of the host device 14 via data bus 36, and manage sending transactions 40 via the data bus 36 to global visibility point 48 according to multiple ordering domains. In some cases, two or more network streams 20 may utilize different ones of the ordering domains. The multiple ordering domains may correspond to multiple network streams 20. In some embodiments, the processing circuitry 26 may be included in the packet processing circuitry 34.

The network interface controller 22 may include additional components to support network communication. In some cases, the network interface controller 22 may include LED indicators to provide visual status information. The packet processing circuitry 34 may include a Media Access Control (MAC) layer for handling data link layer operations. In some cases, the packet processing circuitry 34 may also include a Direct Memory Access (DMA) controller to manage efficient data transfers. The network interface 30 may include an Ethernet port for physical network connections. In some implementations, the network interface controller 22 may incorporate a heat sink or cooling mechanism to manage thermal conditions. The packet processing circuitry 34 may include a Physical Layer (PHY) interface for interfacing with the physical network medium. Additionally, the packet processing circuitry 34 may include a packet processing engine for handling packet encapsulation, decapsulation, and filtering.

The network device 12 also includes memory 28. The processing circuitry 26 and memory 28 may support the operation of the network interface controller 22 in handling network traffic as a producer between the sender 16 and consumer 18. The memory 28 may be configured to store data used by processing circuitry 26.

The host device 14 includes a data bus interface 42 connected to the data bus 36, one or more processors 44, and memory 46. The host device 14 also includes a global visibility point 48, which may be located in the memory 46 or elsewhere within the host device 14 (such as in processor(s) 44). The data bus 36 carries acknowledgments 38 and transactions 40 between the network device 12 and host device 14.

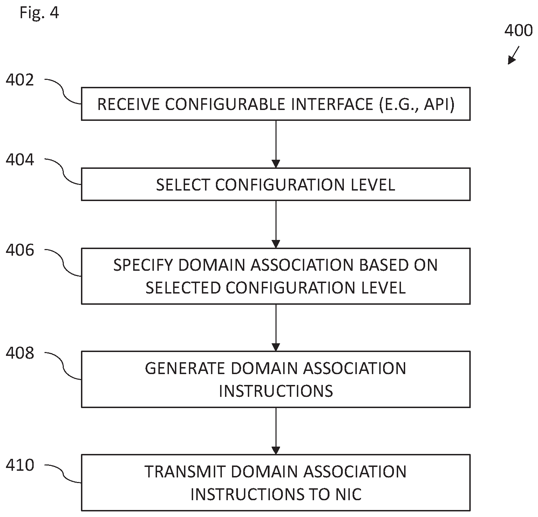

In some cases, the processor(s) 44 may be configured to receive a configurable interface, such as an application program interface 50, from the network device 12 for associating network streams 20 with ordering domains. The processor(s) 44 may generate domain association instructions for network streams 20 and transmit the domain association instructions to the network device 12 via the configurable interface. The configurable interface is described in more detail with reference to Fig. 4.

The processing circuitry 26 may generate transactions 40 based on the network streams 20 for sending to the global visibility point 48 on the host device 14 via the data bus 36 using an unordered input-output protocol. In such a protocol, acknowledgments 38 for the corresponding transactions 40 may be generated by data bus interface 42 once the transactions 40 are globally visible by the consumer(s) 18 at the global visibility point 48.

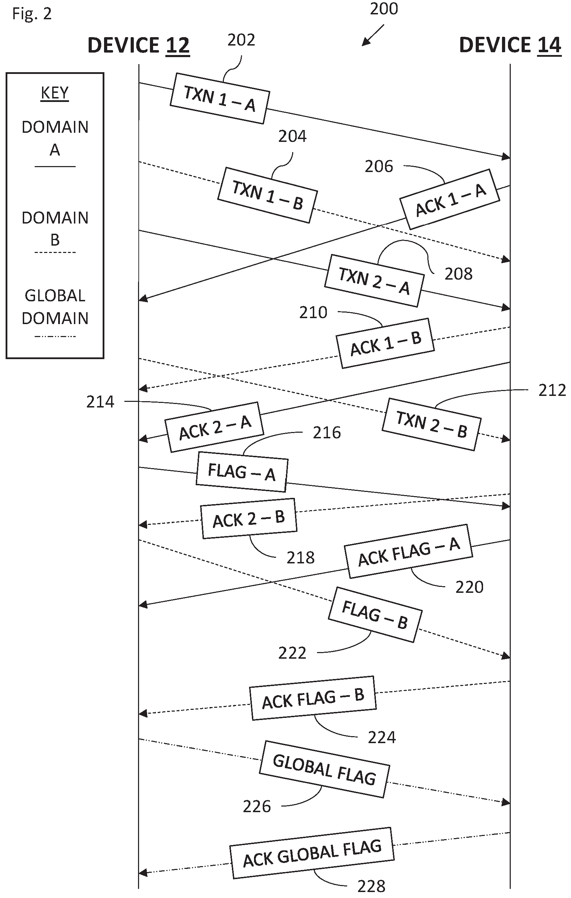

Reference is now made to Fig. 2, which is a sequence diagram 200 illustrating the communication flow between device 12 and device 14, showing how transactions and acknowledgments are handled across different domains. The sequence diagram 200 demonstrates a multi-domain ordering system where transactions are generally managed independently based on their domain assignments. The example includes sending transactions and receiving acknowledgments for two domains, domain A and domain B. Any suitable number of domains may be included and managed by processing circuitry 26.

The sequence begins with device 12 sending a first data transaction for Domain A 202 followed by a first data transaction for Domain B 204. Device 14 sends a first data transaction acknowledgment of domain A 206. Device 12 then sends a second data transaction of domain A 208. The first data transaction acknowledgment of domain A 206 is not received by device 12 until after device 12 sends second data transaction of domain A 208. Device 14 then sends first data transaction acknowledgment of domain B 210.

The processing circuitry 26 is configured to send a given data transaction of a given ordering domain via the data bus 36 to the global visibility point 48 while acknowledgement(s) of previously sent data transaction(s) belonging to the given ordering domain being globally observed by the consumers 18 has not been received by the processing circuitry 26. This is illustrated in the sequence diagram 200, where the second data transaction of domain A 208 is sent by device 12, before device 12 receiving the first data transaction acknowledgment of domain A 206.

The sequence continues with device 12 sending a second data transaction for Domain B 212, followed by device 14 sending a second data transaction acknowledgment of domain A 214. This further demonstrates how the processing circuitry 26 may send data transactions as relaxed order transactions, allowing for parallel processing of transactions from different domains.

In some cases, the processing circuitry 26 may be configured to generate a given flag transaction belonging to a given ordering domain, to send to global visibility point 48. Before sending the flag transaction, the processing circuitry 26 may wait for acknowledgment(s) of all previously sent transactions belonging to that given ordering domain being globally observed by consumers 18. This process is illustrated in the sequence diagram 200 with the flag transaction of domain A 216. The processing circuitry 26 waits for acknowledgment(s) of all previous Domain A transactions before sending this flag. Once these acknowledgments are received, the processing circuitry 26 sends the flag transaction of domain A 216 via the data bus 36 to the global visibility point 48. The flag transaction may be a completion notification that previously sent transactions are globally observed by consumers.

In some cases, the processing circuitry 26 may be configured to send the given flag transaction via the data bus 36 to the global visibility point 48 while acknowledgement of previously sent transaction(s) (e.g., one or more data transactions and/or one or more flag transactions) belonging to one or more other ordering domains being globally observed by the consumers 18 has not been received by the processing circuitry 26. This is demonstrated in the sequence diagram 200 where the flag transaction of domain A 216 is sent before receiving the second data transaction acknowledgment of domain B 218.

The sequence diagram 200 also shows a flag transaction of domain B 222 being sent by device 12 after receiving second data transaction acknowledgment of domain B 218 from device 14. Flag transaction of domain B 222 is also sent by device 12, prior to receiving a flag acknowledgment of domain A 220. This illustrates how a flag transaction of one domain may be sent prior to receiving acknowledgment of previously sent flag transaction(s) belonging to other ordering domain(s).

The sequence diagram 200 also shows a flag acknowledgment of domain B 224 being sent by device 14 to device 12.

In some cases, the processing circuitry 26 may generate a given flag transaction, belonging to a global ordering domain, to send to the global visibility point 48. This is represented in the sequence diagram 200 by the global flag transaction 226. Before sending this global flag transaction 226, the processing circuitry 26 may wait for acknowledgment(s) of all previously sent transactions belonging to any of the multiple ordering domains being globally observed by consumers 18. Once these acknowledgments are received, the processing circuitry 26 sends the global flag transaction 226 via the data bus 36 to the global visibility point 48 in response to receiving the acknowledgment(s) of all previously sent transactions belonging to any of the multiple ordering domains being globally observed by consumers 18.

The sequence diagram 200 concludes with a global flag acknowledgment 228 sent by device 14, confirming global visibility by consumers of the global flag transaction 226.

In some cases, the processing circuitry 26 may send the transactions to the global visibility point 48 via the data bus 36 using an unordered input-output protocol. This allows for the independent treatment of transactions from different domains, as demonstrated throughout the sequence diagram 200.

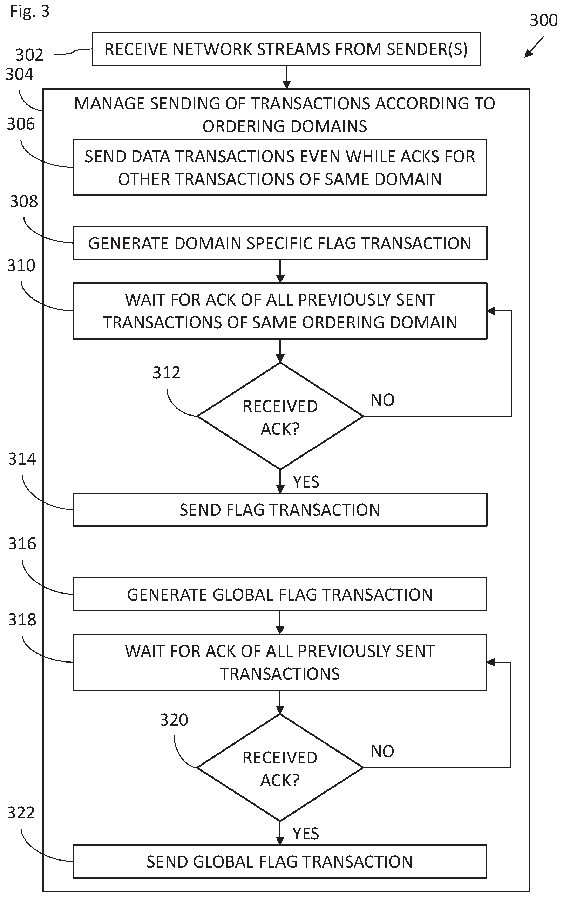

Reference is now made to Fig. 3, which is a flowchart illustrating a method 300 for managing transactions according to ordering domains.

The method 300 begins at a step 302 with receiving network streams over a network from at least one sender. In some cases, at least two of the network streams may utilize different ones of the ordering domains.

At a step 304, the method 300 manages sending transactions via a data bus to a global visibility point of a connected device according to multiple ordering domains. Within step 304, a step 306 allows data transactions to be sent even while acknowledgments for other transactions of the same domain are pending. In some cases, the method 300 may send a given data transaction via the data bus to the global visibility point while acknowledgement(s) of previously sent data transaction(s) belonging to the given ordering domain being globally observed by consumers has not been received.

The method 300 proceeds to a step 308, where a domain-specific flag transaction is generated. This flag transaction may belong to a given ordering domain of the multiple ordering domains. At a step 310, the method 300 waits for acknowledgment of all previously sent transactions of the same ordering domain. In some cases, the method 300 may wait, prior to sending the given flag transaction to the global visibility point, for acknowledgment(s) of all previously sent transactions belonging to the given ordering domain being globally observed by consumers.

The method 300 then moves to a decision step 312, which checks if acknowledgment(s) have been received. If acknowledgment(s) have not been received, the method 300 returns to step 310 to continue waiting. If acknowledgment(s) have been received, the method 300 proceeds to a step 314 to send the flag transaction. In some cases, the method 300 may send the given flag transaction via the data bus to the global visibility point while acknowledgement(s) of previously sent transaction(s) belonging to other ordering domain(s), different to the given ordering domain, being globally observed by the consumers has not been received.

At an optional step 316, the method 300 generates a global flag transaction. This global flag transaction may belong to a global ordering domain. The method 300 then moves to a step 318 to wait for acknowledgment of all previously sent transactions across all domains. In some cases, the method 300 may wait, prior to sending the given flag transaction to the global visibility point, for acknowledgment of all previously sent transactions belonging to any of the multiple ordering domains being globally observed by consumers.

The method 300 proceeds to a decision step 320, which checks if acknowledgments have been received. If acknowledgments have not been received, the method 300 returns to step 318 to continue waiting. If acknowledgments have been received, the method 300 moves to a step 322 to send the global flag transaction.

In some cases, the method 300 may send the transactions to the global visibility point via the data bus using an unordered input-output protocol. This protocol may allow for more efficient transaction management across multiple ordering domains.

Reference is now made to Fig. 4, which is a flowchart illustrating a method 400 for configuring multiple ordering domains in a network device (e.g., network interface controller (NIC)). The method 400 includes several steps for setting up and managing ordering domains within the network device.

The method 400 begins with a step 402 of receiving a configurable interface from the network device. This configurable interface may be used for associating network streams with ordering domains. In some cases, the configurable interface may be an application programming interface (API) provided by the network device to allow external configuration of its ordering domains.

Following the receipt of the configurable interface, the method 400 proceeds to a step 404 of selecting a configuration level. The configuration level may be chosen from one or more options, which may include a driver level, a function level, an application level, or a hypervisor level. The selection of the configuration level may determine the scope and granularity of the domain associations that can be specified.

Once the configuration level has been selected, the method 400 moves to a step 406 of specifying domain associations based on the selected configuration level. This step may involve defining how different network streams should be mapped to various ordering domains within the network device. Steps 404 and 406 may be performed by a network administrator making appropriate selections using the configurable interface.

The method 400 then proceeds to a step 408 of generating domain association instructions for a plurality of network streams. These instructions may encode the specified domain associations in a format that can be interpreted and implemented by the network device.

Finally, the method 400 concludes with a step 410 of transmitting the domain association instructions to the network device via the configurable interface. This step may involve sending the generated instructions through the previously received interface, allowing the network device to configure its internal ordering domains according to the specified associations for use in the method 300 of Fig. 3.

In some cases, the method 400 may be implemented by a host system or management software that interacts with the network device to configure behavior of the network device. The ability to configure multiple ordering domains may provide flexibility in managing network traffic and optimizing performance for different types of network streams.

In some cases, the system may be configured to select a configuration level for managing the multiple ordering domains. The configuration level may be selected from one or more of: a driver level, a function level, an application level, or a hypervisor level. This flexibility in configuration allows for adaptation to various network environments and use cases.

When a driver level configuration is selected, the domain associations may be specified at the network driver level. This approach may allow for finegrained control over network streams and their corresponding ordering domains, potentially optimizing performance for specific hardware configurations.

In cases where a function level configuration is chosen, the domain associations may be specified for individual network functions or services. This granularity may enable tailored ordering domain management for different types of network traffic or applications running on the system.

An application-level configuration may allow for domain associations to be specified on a per-application basis. This approach may provide developers with the ability to optimize ordering domain usage for their specific application requirements, potentially improving overall system efficiency.

When a hypervisor level configuration is selected, the domain associations may be managed at the virtualization layer. This may be particularly useful in environments with multiple virtual machines or containers, allowing for efficient allocation of ordering domains across different virtualized workloads.

The system may also incorporate machine learning techniques to continuously improve domain association strategies over time. By analyzing historical performance data and network usage patterns, the system may adapt its domain association algorithms to better suit evolving network conditions and application requirements.

In some cases, the system may implement adaptive domain association algorithms that learn from network behavior and automatically adjust configurations to optimize performance. These algorithms may utilize techniques such as reinforcement learning or neural networks to continuously refine domain assignment strategies based on observed network patterns and performance outcomes.

In some cases, the system may support hierarchical domain association schemes, allowing for nested or layered ordering domains. This approach may be particularly useful in complex network environments with multiple levels of traffic prioritization or quality of service requirements.

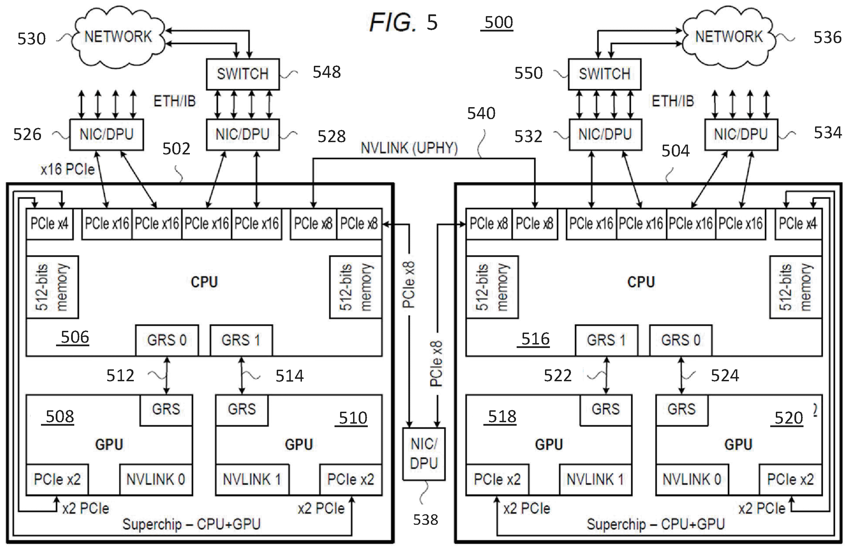

Reference is now made to Fig. 5, which is a block diagram that schematically illustrates a computing system 500, e.g., a data center or a High-Performance Computing (HPC) cluster, in accordance with an embodiment of the present disclosure.

System 500 comprises a plurality of subsystems, e.g., multiple processing devices coupled to each other, multiple network devices, and multiple networks, according to at least one embodiment. Computing system 500 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU to ensure efficient data transfer across computing system 500 and to one or more external networks 530, 536. In the present example, system 500 comprises a packet switch 548 that connects NIC/DPU 528 to network 530, and a packet switch 550 that connects NIC/DPU 532 to network 536.

The coupling of processing devices through NVLink allows for seamless data exchange and parallel processing, enhancing overall computational performance. The processing devices are connected to multiple networks through one or more network interface cards (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 500 can include one or more CPUs and one or more GPUs.

Fig. 5 also demonstrates an example architecture of a multi-GPU architecture. As illustrated in the figure, computing system 500 includes a processing device 502 with a multi-GPU architecture. In particular, processing device 502 may be a system-on-chip and includes multiple subsystems such as a CPU 506, a GPU 508, and a GPU 510. CPU 506 can be coupled to GPU 508 via a die-to-die (D2D) or chip-to-chip (C2C) interconnect 512, such as a Ground-Referenced Signaling interconnect (GRS interconnect). CPU 506 can be coupled to GPU 510 via a D2D or C2C interconnect 514. CPU 506 can also couple to GPU 508 and GPU 510 via PCIe interconnects.

CPU 506 can be coupled to one or more NICs or DPUs, which are coupled to one or more networks. For example, as illustrated in Fig. 5, CPU 506 is coupled to a first NIC/DPU 526, which is coupled to a network 530. CPU 506 is also coupled to a second NIC/DPU 528, which is coupled to network 530 via switch 548. NIC/DPU 526 and NIC/DPU 528 can be coupled to network 530 over Ethernet (ETH), NVLINK or InfiniBand (IB) connections, for example.

Computing system 500 also includes a processing device 504 with a multi-GPU architecture. In particular, processing device 504 includes multiple subsystems including a CPU 516, a GPU 518, and a GPU 520. CPU 516 can be coupled to GPU 518 via a D2D or C2C interconnect 522. CPU 516 can be coupled to GPU 520 via a D2D or C2C interconnect 524. CPU 516 can also couple to GPU 518 and GPU 520 via PCIe interconnects. CPU 516 can be coupled to one or more NICs or DPUs, which are coupled to one or more networks. For example, as illustrated in Fig. 5, CPU 516 is coupled to a first NIC/DPU 532, which is coupled to a network 536. CPU 516 is also coupled to a second NIC/DPU 534, which is coupled to network 536 via switch 550. NIC/DPU 532 and NIC/DPU 534 can be coupled to network 536 over Ethernet (ETH), NVLINK or InfiniBand (IB) connections.

In at least one embodiment, processing device 502 and processing device 504 can communicate with each other via a NIC/DPU 538, such as over PCIe interconnects. Processing device 502 and processing device 504 can also communicate with each other over a high-bandwidth communication interconnect 540, such as an NVLink interconnect or other high-speed interconnects. The packet switches in Fig. 5 may comprise, for example, Nvidia Quantum-2 switches. The NICs/DPUs in the figure may comprise, for example, Nvidia Bluefield DPUs.

The connected device may be any suitable device, such as: an accelerator device; a processing device including a central processing unit (CPU) and/or a graphics processing unit (GPU); a host device connected to one or more peripheral devices; a peripheral device connected to another peripheral device and/or one or more host devices; a network device, e.g., a network interface controller (NIC) device, a data processing unit (DPU) or smart NIC including a NIC and one or more processing cores, or a network switch. One or more of the processing steps described herein may be performed by a CPU, GPU, DPU, NIC, or any suitable combination thereof.

The network device or NIC may include any of the following: an Ethernet Port (RJ45 Connector), which is the physical interface where the network cable (usually an Ethernet cable) connects to the NIC and is used for wired network connections; packet processing hardware or circuitry, which is responsible for handling network communication and processes incoming and outgoing data packets and manages the network interface functions; a memory (such as RAM or ROM) to store temporary data, such as network packet buffers, configuration settings, and firmware, and helps in speeding up data transfer and processing; firmware, which is software programmed into the NIC's memory and controls the hardware operations and may perform firmware updates to improve performance or add new features to the NIC; LED Indicators that provide visual indicators of network status, common indicators including power status, network activity, and link speed; a bus Interface (e.g., PCI or PCIe) to connect the NIC to the host computer's motherboard; a processor to handle network processing tasks as well as other processing tasks to offload work from the main CPU of the host device and improve network performance; a heat sink or cooling mechanism (e.g., for high-performance NICs), especially those used in servers, to prevent overheating; power management circuitry to ensure the NIC receives the correct amount of power and manages power consumption efficiently; and/or connector pins and circuitry including internal connections and pathways that route signals between the NIC's components.

The packet processing hardware or circuitry is the central component of the NIC and handles network communications. It may include several key components that work together to manage and process network data, such as any one or more of the following: MAC (Media Access Control) Layer, which is responsible for handling the data link layer of the OSI model and manages how data packets are formatted, addressed, and transmitted over the network; MAC address register, which stores the unique hardware address (MAC address) of the NIC; a frame buffer that temporarily holds data frames as they are being processed; a PHY (Physical Layer) Interface that interfaces with the physical medium (such as Ethernet cables) and is responsible for the actual transmission and reception of data bits over the network; a transceiver that converts data between the digital signals used by the MAC layer and the analog signals used for transmission over the network medium; DMA (Direct Memory Access) Controller that manages data transfers between the NIC and the computer's memory without involving the CPU and helps to offload processing tasks from the CPU and improve data transfer efficiency; a packet Processing Engine that handles the encapsulation and decapsulation of network packets, and processes incoming and outgoing packets, managing tasks like error checking and packet filtering; buffer management, which includes memory areas for storing packets temporarily, such as transmit buffers to store packets that are being sent from the computer to the network, receive buffers to store packets received from the network before they are processed by the system; an interrupt controller that manages and generates interrupts to notify the CPU of events such as packet reception or transmission completion and helps in efficient handling of network events; a clock generator, which provides timing signals for the various components of the NIC to synchronize their operations; a power management unit to regulate power consumption and manages power-saving features of the NIC chip to improve energy efficiency; error handling and correction logic, which detects and corrects errors in data transmission and reception, and may include features for error-checking protocols like CRC (Cyclic Redundancy Check); configuration registers that store configuration settings and parameters that control the NIC's operation, such as speed settings, interrupt configurations, and buffer sizes; firmware/ROM that contains the embedded software that controls the NIC's operations and manages network protocols.

The network device may be a switch, which may include any of the following: ports where network cables connect; switching fabric that manages data transfer between ports; a MAC address table that stores device addresses and port information; a forwarding engine that directs data packets to the correct ports; buffer memory that temporarily holds data to manage traffic; a management processor that handles configuration and monitoring in managed switches; a power supply that provides electrical power; a cooling system that keeps the switch from overheating; firmware that controls the switch; LED Indicators that show status and activity; and networking modules (in modular switches) that allow for additional ports or features.

In practice, some or all of these functions may be combined in a single physical component or, alternatively, implemented using multiple physical components. These physical components may comprise hard-wired or programmable devices, or a combination of the two. In some embodiments, at least some of the functions of the processing circuitry may be carried out by a programmable processor under the control of suitable software. This software may be downloaded to a device in electronic form, over a network, for example. Alternatively, or additionally, the software may be stored in tangible, non-transitory computer-readable storage media, such as optical, magnetic, or electronic memory.

The flowchart and block diagrams in the figures illustrate the architecture, functionality, and operation of possible implementations of systems, methods and computer program products according to various examples of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. The descriptions of the various examples of the present disclosure have been presented for purposes of illustration, but are not intended to be exhaustive or limited to the examples disclosed. Many modifications and variations will be apparent to those of ordinary skill in the art without departing from the scope and spirit of the described examples.

As used herein, the singular form "a", "an" and "the" include plural references unless the context clearly dictates otherwise.

Various features of the disclosure which are, for clarity, described in the contexts of separate embodiments may also be provided in combination in a single embodiment. Conversely, various features of the disclosure which are, for brevity, described in the context of a single embodiment may also be provided separately or in any suitable sub-combination.

The embodiments described above are cited by way of example, and the present disclosure is not limited by what has been particularly shown and described hereinabove. Rather the scope of the disclosure includes both combinations and subcombinations of the various features described hereinabove, as well as variations and modifications thereof which would occur to persons skilled in the art upon reading the foregoing description and which are not disclosed in the prior art.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A device, comprising:
   a network interface to receive network streams over a network;
   a data bus interface to share data with a connected device via a data bus; and
   processing circuitry to manage sending of transactions via the data bus to a global visibility point of the connected device according to multiple ordering domains such that at least two of the network streams utilize different ones of the ordering domains.
Clause 2. The device according to clause 1, further comprising a network interface controller, which includes packet processing circuitry comprising the processing circuitry.
Clause 3. The device according to clause 1, wherein the processing circuitry is to:
   generate a given flag transaction, belonging to a given ordering domain of the multiple ordering domains, to send to the global visibility point;
   wait, prior to sending the given flag transaction to the global visibility point, for at least one acknowledgment of all previously sent transactions belonging to the given ordering domain being globally observed by consumers; and
   send the given flag transaction via the data bus to the global visibility point in response to receiving the at least one acknowledgment.
Clause 4. The device according to clause 3, wherein the given flag transaction is a completion notification that the previous sent transactions are globally observed by the consumers.
Clause 5. The device according to clause 3, wherein the processing circuitry is to send the given flag transaction via the data bus to the global visibility point while at least one acknowledgement of at least one previously sent transaction belonging to at least another ordering domain, different to the given ordering domain, being globally observed by the consumers has not been received by the processing circuitry.
Clause 6. The device according to clause 5, wherein the at least one previously sent transaction belonging to the at least another ordering domain includes a flag transaction.
Clause 7. The device according to clause 5, wherein the at least one previously sent transaction belonging to the at least another ordering domain includes a data transaction.
Clause 8. The device according to clause 3, wherein the processing circuitry is to send a given data transaction via the data bus to the global visibility point while at least one acknowledgement of at least one previously send data transaction belonging to the given ordering domain being globally observed by the consumers has not been received by the processing circuitry.
Clause 9. The device according to clause 1, wherein the multiple ordering domains correspond to multiple network steams.
Clause 10. The device according to clause 1, wherein the processing circuitry is to:
   generate a given flag transaction, belonging to a global ordering domain, to send to the global visibility point;
   wait, prior to sending the given flag transaction to the global visibility point, for acknowledgment of all previously sent transactions belonging to any of the multiple ordering domains being globally observed by consumers; and
   send the given flag transaction via the data bus to the global visibility point in response to receiving the acknowledgment.
Clause 11. The device according to clause 1, wherein the processing circuitry is to send the transactions to the global visibility point via the data bus using an unordered input-output protocol.
Clause 12. A system for configuring multiple ordering domains in a network interface controller (NIC), the system comprising:
   a processor to:
      receive a configurable interface from the NIC for associating network streams with ordering domains;
      generate domain association instructions for a plurality of network streams; and
      transmit the domain association instructions to the NIC via the configurable interface; and
   an interface to share data, including the domain association instructions, with the NIC.
Clause 13. The system according to clause 12, wherein the processor is to:
   select a configuration level from one or more of: a driver level, a function level, an application level, or a hypervisor level; and
   specify the domain association based on the selected configuration level.
Clause 14. A method, comprising:
   receiving network streams over a network; and
   managing sending transactions via a data bus to a global visibility point of a connected device according to multiple ordering domains such that at least two of the network streams utilize different ones of the ordering domains.
Clause 15. The method according to clause 14, further comprising:
   generating a given flag transaction, belonging to a given ordering domain of the multiple ordering domains, to send to the global visibility point;
   waiting, prior to sending the given flag transaction to the global visibility point, for at least one acknowledgment of all previously sent transactions belonging to the given ordering domain being globally observed by consumers; and
   sending the given flag transaction via the data bus to the global visibility point in response to receiving the at least one acknowledgment.
Clause 16. The method according to clause 15, wherein the given flag transaction is a completion notification that the previous sent transactions are globally observed by the consumers.
Clause 17. The method according to clause 15, further comprising sending the given flag transaction via the data bus to the global visibility point while at least one acknowledgement of at least one previously sent transaction belonging to at least another ordering domain, different to the given ordering domain, being globally observed by the consumers has not been received.
Clause 18. The method according to clause 15, further comprising sending a given data transaction via the data bus to the global visibility point while at least one acknowledgement of at least one previously sent data transaction belonging to the given ordering domain being globally observed by the consumers has not been received.
Clause 19. The method according to clause 14, further comprising:
   generating a given flag transaction, belonging to a global ordering domain, to send to the global visibility point;
   waiting, prior to sending the given flag transaction to the global visibility point, for acknowledgment of all previously sent transactions belonging to any of the multiple ordering domains being globally observed by consumers; and
   sending the given flag transaction via the data bus to the global visibility point in response to receiving the acknowledgment.
Clause 20. The method according to clause 14, further comprising sending the transactions to the global visibility point via the data bus using an unordered input-output protocol.
Clause 21. A method for configuring multiple ordering domains in a network interface controller (NIC), the method comprising:
   receiving a configurable interface from the NIC for associating network streams with ordering domains;
   generating domain association instructions for a plurality of network streams; and
   transmitting the domain association instructions to the NIC via the configurable interface.
Clause 22. The method according to clause 21, wherein the generating comprises:
   selecting a configuration level from one or more of: a driver level, a function level, an application level, or a hypervisor level; and
   specifying the domain association based on the selected configuration level.

## Claims

1. A device, comprising:
a network interface to receive network streams over a network;
a data bus interface to share data with a connected device via a data bus; and
processing circuitry to manage sending of transactions via the data bus to a global visibility point of the connected device according to multiple ordering domains such that at least two of the network streams utilize different ones of the ordering domains.

2. The device according to claim 1, further comprising a network interface controller, which includes packet processing circuitry comprising the processing circuitry.

3. The device according to claim 1 or 2, wherein the processing circuitry is to:
generate a given flag transaction, belonging to a given ordering domain of the multiple ordering domains, to send to the global visibility point;
wait, prior to sending the given flag transaction to the global visibility point, for at least one acknowledgment of all previously sent transactions belonging to the given ordering domain being globally observed by consumers; and
send the given flag transaction via the data bus to the global visibility point in response to receiving the at least one acknowledgment.

4. The device according to claim 3, wherein the given flag transaction is a completion notification that the previous sent transactions are globally observed by the consumers, wherein the processing circuitry is to send the given flag transaction via the data bus to the global visibility point while at least one acknowledgement of at least one previously sent transaction belonging to at least another ordering domain, different to the given ordering domain, being globally observed by the consumers has not been received by the processing circuitry, wherein the at least one previously sent transaction belonging to the at least another ordering domain includes a flag transaction and/or a data transaction.

5. The device according to claim 3 or 4, wherein the processing circuitry is to send a given data transaction via the data bus to the global visibility point while at least one acknowledgement of at least one previously send data transaction belonging to the given ordering domain being globally observed by the consumers has not been received by the processing circuitry.

6. The device according to any of claims 1-5, wherein the multiple ordering domains correspond to multiple network steams.

7. The device according to any of claims 1-6, wherein the processing circuitry is to:
generate a given flag transaction, belonging to a global ordering domain, to send to the global visibility point;
wait, prior to sending the given flag transaction to the global visibility point, for acknowledgment of all previously sent transactions belonging to any of the multiple ordering domains being globally observed by consumers; and
send the given flag transaction via the data bus to the global visibility point in response to receiving the acknowledgment.

8. The device according to any of claims 1-7, wherein the processing circuitry is to send the transactions to the global visibility point via the data bus using an unordered input-output protocol.

9. A system for configuring multiple ordering domains in a network interface controller (NIC), the system comprising:
a processor to:
receive a configurable interface from the NIC for associating network streams with ordering domains;
generate domain association instructions for a plurality of network streams; and
transmit the domain association instructions to the NIC via the configurable interface; and
an interface to share data, including the domain association instructions, with the NIC, preferably wherein the processor is to:
select a configuration level from one or more of: a driver level, a function level, an application level, or a hypervisor level; and
specify the domain association based on the selected configuration level.

10. A method, comprising:
receiving network streams over a network; and
managing sending transactions via a data bus to a global visibility point of a connected device according to multiple ordering domains such that at least two of the network streams utilize different ones of the ordering domains.

11. The method according to claim 10, further comprising:
generating a given flag transaction, belonging to a given ordering domain of the multiple ordering domains, to send to the global visibility point;
waiting, prior to sending the given flag transaction to the global visibility point, for at least one acknowledgment of all previously sent transactions belonging to the given ordering domain being globally observed by consumers; and
sending the given flag transaction via the data bus to the global visibility point in response to receiving the at least one acknowledgment, preferably wherein the given flag transaction is a completion notification that the previous sent transactions are globally observed by the consumers.

12. The method according to claim 11, further comprising:
sending the given flag transaction via the data bus to the global visibility point while at least one acknowledgement of at least one previously sent transaction belonging to at least another ordering domain, different to the given ordering domain, being globally observed by the consumers has not been received; and/or
sending a given data transaction via the data bus to the global visibility point while at least one acknowledgement of at least one previously sent data transaction belonging to the given ordering domain being globally observed by the consumers has not been received.

13. The method according to any of claims 10, 11, or 12, further comprising:
generating a given flag transaction, belonging to a global ordering domain, to send to the global visibility point;
waiting, prior to sending the given flag transaction to the global visibility point, for acknowledgment of all previously sent transactions belonging to any of the multiple ordering domains being globally observed by consumers; and
sending the given flag transaction via the data bus to the global visibility point in response to receiving the acknowledgment.

14. The method according to any of claims 10-13, further comprising sending the transactions to the global visibility point via the data bus using an unordered input-output protocol.

15. A method for configuring multiple ordering domains in a network interface controller (NIC), the method comprising:
receiving a configurable interface from the NIC for associating network streams with ordering domains;
generating domain association instructions for a plurality of network streams; and
transmitting the domain association instructions to the NIC via the configurable interface, preferably wherein the generating comprises:
selecting a configuration level from one or more of: a driver level, a function level, an application level, or a hypervisor level; and
specifying the domain association based on the selected configuration level.
